# DEMANDE DE BREVET EUROPEEN

(11) **EP 3 240 324 A1**
(43) Date de publication de la demande: **01.11.2017**
(21) Numéro de dépôt: 17168112.5
(22) Date de dépôt: 26.04.2017
(51) Int. Cl.: H04W 24/02, H04W 48/18, H04W 76/02

(54) **PROCÉDÉ D'ATTACHEMENT D'UN ÉQUIPEMENT D'UTILISATEUR À UNE STATION DE BASE D'UN SYSTÈME DE TÉLÉCOMMUNICATIONS**

(30) Priorité: 27.04.2016 FR 1653722
(71) Demandeur: Airbus DS SLC, 78990 Elancourt (FR)
(72) Inventeur: PISON, Laurent, 78760 JOUARS PONCHARTRAIN (FR)
(74) Mandataire: Cabinet Camus Lebkiri

(57) **Abrégé**

L'invention concerne un procédé d'attachement d'un équipement d'utilisateur à une première station de base d'un système de télécommunications large-bande, ledit procédé étant caractérisé en ce que, la première station de base comprenant un premier module de gestion de la mobilité identifié par un premier identifiant, le procédé comprend une étape de réception (E2b) d'une requête d'attachement, envoyée par ledit équipement d'utilisateur, comprenant un deuxième identifiant d'un module de gestion de la mobilité et, lorsque le deuxième identifiant est identique au premier identifiant, une étape d'attachement (E5) de l'équipement d'utilisateur à la première station de base.

## Description

### DOMAINE TECHNIQUE ET OBJET DE L'INVENTION

La présente invention se rapporte au domaine des télécommunications et concerne plus particulièrement un procédé d'attachement d'un équipement d'utilisateur à une station de base d'un système de télécommunications ainsi qu'un équipement d'utilisateur, une station de base, un système de télécommunications comprenant un tel équipement d'utilisateur et une telle station de base, et un programme d'ordinateur.

### ETAT DE LA TECHNIQUE

Les réseaux mobiles privés de radiocommunication (Private Mobile Radiocommunications ou PMR en langue anglaise) sont utilisés notamment par les professionnels des services de sécurité (armées, polices, ambulances, pompiers...), des entreprises de bâtiments, de travaux publics ou bien encore de l'industrie. De tels réseaux sont des réseaux fermés utilisant des ressources dédiées, c'est-à-dire que seul un groupe d'équipements d'utilisateur prédéterminés peut utiliser ces ressources afin de communiquer entre eux.

Parmi les réseaux PMR, on distingue les réseaux PMR dits « bande-étroite » et les réseaux PMR dits « large-bande ». Les réseaux PMR bande-étroite utilisent une pluralité de bandes de fréquences dédiées de faible largeur et peuvent être, par exemple, des réseaux PMR de type Tetra, Tetrapol ou P25 connus de l'homme du métier. Les réseaux PMR bande-étroite sont limités en bande passante, du fait du nombre restreint de ressources en fréquences disponibles, et ne permettent ainsi que la transmission de communications vocales ou de données à faible débit. A titre d'exemple, il n'est pas possible de transmettre une communication vidéo entre deux équipements d'utilisateur à travers un tel réseau.

On connait aujourd'hui un système de télécommunications travaillant en bandes de fréquences étroites, utilisé notamment dans les applications militaires, comprenant une pluralité de stations de base mobiles à chacune desquelles est attachée une pluralité d'équipements d'utilisateur mobiles. Chaque équipement d'utilisateur n'est associé qu'à une et une seule station de base prédéterminée de sorte à former avec elle une cellule mobile autonome. Chaque cellule autonome constitue ainsi un réseau PMR bande-étroite indépendant, utilisant par exemple des bandes de fréquences distinctes pour communiquer. Par exception, un équipement d'utilisateur associé à une première station de base peut se connecter à une deuxième station de base pour communiquer en cas d'urgence ou si la première station de base à laquelle il est associé est reliée par un lien de communication direct temporaire avec la deuxième station de base.

Les réseaux PMR large-bande utilisent au moins une bande large de fréquences dans laquelle les signaux d'une pluralité de bandes de fréquences dédiées de faible largeur sont modulés en fréquences de sorte à étaler leur spectre sur au moins une partie de la largeur de la bande large. Une telle modulation permet d'échanger des données à des débits élevés, par exemple supérieurs à 1 Mb/s, afin notamment de communiquer par vidéo ou d'envoyer des fichiers de données. De tels réseaux large-bande peuvent, par exemple, être des réseaux de type « Universal Mobile Terrestrial Communication » (UMTS) ou « Evolution à Long Terme » (Long Term Evolution ou LTE) définis dans le cadre du projet de partenariat de troisième génération 3GPP, plus connu sous le nom 3GPP (Third Generation Partnership Project en langue anglaise).

Dans les réseaux de communication large-bande, par exemple de type 3GPP LTE, les équipements d'utilisateur ne sont pas associés à une station de base prédéterminée et peuvent s'attacher indifféremment à toute station de base du réseau. Ainsi, lorsqu'un équipement d'utilisateur souhaite s'attacher à une station de base afin de communiquer, il envoie une requête d'attachement, via l'une des stations de base, à une entité d'allocation de ressources située dans le réseau qui sélectionne alors la station de base la plus adaptée pour que l'équipement d'utilisateur puisse établir une communication, par exemple la station de base dont le signal reçu par l'équipement d'utilisateur est le plus puissant ou bien la station de base qui dispose du plus grand nombre de ressources en bande-passante disponible.

L'attachement d'un équipement d'utilisateur à une station de base tel qu'il est défini aujourd'hui dans les réseaux large-bande tels que, par exemple, les réseaux 3GPP LTE, n'est donc pas compatible avec un système de télécommunications à cellules autonomes travaillant en bandes de fréquences étroites tel que présenté précédemment puisque dans un tel système, un équipement d'utilisateur doit s'attacher à la station de base à laquelle il est associé alors que, dans un réseau large-bande, un équipement d'utilisateur s'attache une station de base qui est sélectionnée par une entité d'allocation de ressources située dans le réseau.

Il n'existe pas à ce jour de système de télécommunications PMR large-bande à cellules autonomes et l'invention a donc pour but de pallier ce manque.

### PRESENTATION GENERALE DE L'INVENTION

A cet effet, l'invention a tout d'abord pour objet un procédé d'attachement d'un équipement d'utilisateur, de préférence mobile, à une première station de base d'un système de télécommunications large-bande, ledit procédé étant remarquable en ce que, la première station de base comprenant un premier module de gestion de la mobilité identifié par un premier identifiant, le procédé comprend une étape de réception d'une requête d'attachement, envoyée par ledit équipement d'utilisateur, comprenant un deuxième identifiant d'un module de gestion de la mobilité et, lorsque le deuxième identifiant est identique au premier identifiant, une étape d'attachement de l'équipement d'utilisateur à la première station de base.

Par les termes « attaché » et « attachement », on entend que l'équipement d'utilisateur est autorisé à se connecter à la première station de base pour communiquer des données applicatives. Par les termes « données applicatives », on entend des données échangées dans le cadre d'une application telle que, par exemple, une application de communication par voix, par vidéo, une application d'échange de fichiers etc.

Ainsi, une station de base est associée à un ou à une pluralité d'équipements d'utilisateur prédéterminés qui sont autorisés à s'attacher à ladite station de base en utilisant un identifiant correspondant à l'identifiant de son module de gestion de la mobilité. De même, un équipement d'utilisateur est associé à une et une seule station de base, c'est-à-dire qu'un équipement d'utilisateur n'envoie que des requêtes d'attachement comprenant l'identifiant de la station de base à laquelle il a été préalablement associé. Chaque station de base et son ou ses équipements d'utilisateur associés constituent ainsi une cellule autonome, de préférence mobile, la station de base pouvant en outre se connecter à une autre station de base via un lien de communication direct ou via un réseau de télécommunications large-bande.

Avantageusement, l'étape d'attachement comprend une authentification de l'équipement d'utilisateur.

Selon un aspect de l'invention, l'attachement de l'équipement d'utilisateur à la première station de base est refusé lorsque le deuxième identifiant est différent du premier identifiant.

Selon un autre aspect de l'invention, l'attachement de l'équipement d'utilisateur à la première station de base est autorisé lorsque le deuxième identifiant est différent du premier identifiant et que la première station de base est connectée via un lien de communication, de préférence un lien de communication de type Internet Protocol (IP) connu de l'homme du métier, à une deuxième station de base comprenant un deuxième module de gestion de la mobilité identifié par un troisième identifiant, identique au deuxième identifiant. Dans ce cas, l'étape d'attachement peut comprendre une sous-étape d'autorisation d'accès et/ou d'authentification de l'équipement d'utilisateur auprès du deuxième module de gestion de la mobilité.

Selon un autre aspect de l'invention, la requête d'attachement comprend en outre une information sur la nature de la requête d'attachement, urgente ou non-urgente, et l'attachement de l'équipement d'utilisateur à la première station de base est autorisé lorsque le deuxième identifiant est différent du premier identifiant et que la requête d'attachement est de nature urgente. La nature urgente de la requête indique que l'équipement d'utilisateur doit s'attacher à la première station de base alors même qu'il n'est pas associé à ladite première station de base (mais à une autre station de base) et qu'il n'est donc pas autorisé à s'attacher à la première station de base lorsque la nature de la requête d'attachement est non-urgente. Un tel cas d'urgence peut se produire, par exemple, lorsque l'équipement d'utilisateur a besoin d'établir un appel d'urgence alors qu'il n'est pas dans la couverture cellulaire de la station de base à laquelle il est associé et qu'il est dans la couverture cellulaire de la première station de base.

La station de base est de préférence une station de base mobile mais peut également être une station de base fixe.

De manière avantageuse, le procédé comprend une étape préliminaire de sélection d'un mode de fonctionnement parmi un mode de fonctionnement en cellule mobile autonome pour lequel le procédé tel que présenté précédemment est mis en oeuvre, ou un mode de fonctionnement en réseau de télécommunications large-bande dans lequel la première station de base est connectée via ledit réseau à une pluralité de stations de base, par exemple fixes, et autorise tout équipement d'utilisateur à s'attacher, par exemple en fonction de sa proximité ou des ressources en bande passante disponibles. Ce dernier mode de fonctionnement en réseau correspond, par exemple, au fonctionnement d'un réseau 3GPP UMTE ou LTE public (i.e. commercial). Ainsi, dans ce mode de fonctionnement, le réseau de télécommunications est de préférence un réseau 3GPP de type UMTS, LTE, LTE-Advanced ou ultérieur.

L'invention concerne aussi un procédé d'attachement d'un équipement d'utilisateur, de préférence mobile, à une station de base d'un système de télécommunications large-bande, ledit procédé étant remarquable en ce que, ladite station de base comprenant un module de gestion de la mobilité, le procédé comprend une étape d'envoi, par ledit équipement d'utilisateur, d'une requête d'attachement comprenant un identifiant dudit module de gestion de la mobilité de manière à attacher l'équipement d'utilisateur à la station de base.

Selon un mode de réalisation le procédé comprend une étape de génération de la part de l'équipement utilisateur d'une requête comprenant au moins une information sur la nature non-urgente ou urgente de la communication, une étape d'envoi de la part de l'équipement utilisateur de ladite requête à la station de base et une étape de réception d'un message retour envoyé par la station de base, ledit message retour indiquant que l'attachement est réalisé lorsque la communication est urgente ou comprenant une information de confirmation de l'état d'attachement lorsque la communication est non-urgente.

L'invention concerne aussi un équipement d'utilisateur comprenant une unité de communication radio, configurée pour communiquer avec un module de communication radio d'une station de base d'un système de télécommunications large-bande, et une unité d'attachement, configurée pour générer une requête d'attachement à une station de base comprenant un deuxième identifiant d'un module de gestion de la mobilité et pour l'envoyer à ladite station de base, via l'unité de communication radio, dans le but d'attacher l'équipement d'utilisateur à la station de base.

Selon un aspect préféré de l'invention, l'équipement d'utilisateur comprend une unité applicative configurée pour échanger des données applicatives avec un module applicatif d'une station de base.

L'invention concerne aussi une station de base d'un système de télécommunications large-bande, ladite station de base étant remarquable en ce qu'elle comprend un module de gestion de la mobilité identifié par un premier identifiant et un module de communication radio configuré pour recevoir, d'un équipement d'utilisateur, une requête d'attachement comprenant un deuxième identifiant d'un module de gestion de la mobilité, le module de gestion de la mobilité étant configuré pour, lorsque le deuxième identifiant est identique au premier identifiant, attacher l'équipement d'utilisateur à la station de base.

De préférence, le module de communication de la station de base est avantageusement un eNodeB.

Selon une caractéristique de l'invention, la station de base comprend un module de données d'utilisateurs, relié au module de gestion de la mobilité, configuré pour stocker et gérer des données associées à des équipements d'utilisateur de sorte à autoriser ou non leur attachement à la station de base.

Selon un aspect de l'invention, la station de base comprend en outre un module de passerelle servante, un module de passerelle réseau et/ou un module applicatif, ledit module de passerelle servante étant configuré pour router, c'est-à-dire aiguiller, des paquets de données entre le module de passerelle réseau de paquets de données et le module de communication radio, ledit module de passerelle réseau de paquets de données étant configuré pour communiquer des paquets de données avec une entité extérieure à la station de base via un lien de communication, ledit module applicatif étant configuré pour échanger des données applicatives avec une unité applicative d'un équipement d'utilisateur.

L'invention concerne aussi un système comprenant au moins un équipement d'utilisateur tel que présenté précédemment et au moins une station de base telle que présentée précédemment.

L'invention concerne aussi un programme d'ordinateur comportant des instructions pour la mise en oeuvre du procédé de l'invention mise en oeuvre par une station de base lorsque le programme est exécuté par au moins un processeur.

L'invention concerne aussi un programme d'ordinateur comportant des instructions pour la mise en oeuvre du procédé de l'invention mise en oeuvre par une station de base lorsque le programme est exécuté par au moins un processeur.

D'autres caractéristiques et avantages de l'invention apparaîtront lors de la description qui suit faite en regard des figures annexées données à titre d'exemples non limitatifs et dans lesquelles des références identiques sont données à des objets semblables.

### DESCRIPTION DES FIGURES

La figure 1 illustre une forme de réalisation du système selon l'invention.
La figure 2 illustre un exemple de cellule commune.
La figure 3 illustre une forme de réalisation de la station de base selon l'invention.
La figure 4 illustre une forme de réalisation de l'équipement d'utilisateur selon l'invention.
La figure 5 est un organigramme illustrant un mode de mise en oeuvre du procédé selon l'invention.

### DESCRIPTION DETAILLEE DE L'INVENTION

### I. Système 1

Le système selon l'invention est décrit ci-après dans le cadre d'une infrastructure de réseau 3GPP LTE. Ceci n'est cependant pas limitatif de la portée de la présente invention dans la mesure où l'invention peut s'appliquer à tout type de réseau de télécommunications adapté tel que, par exemple, un réseau 3GPP UMTS, un réseau LTE-Advanced voire un réseau de type GPRS ou GSM.

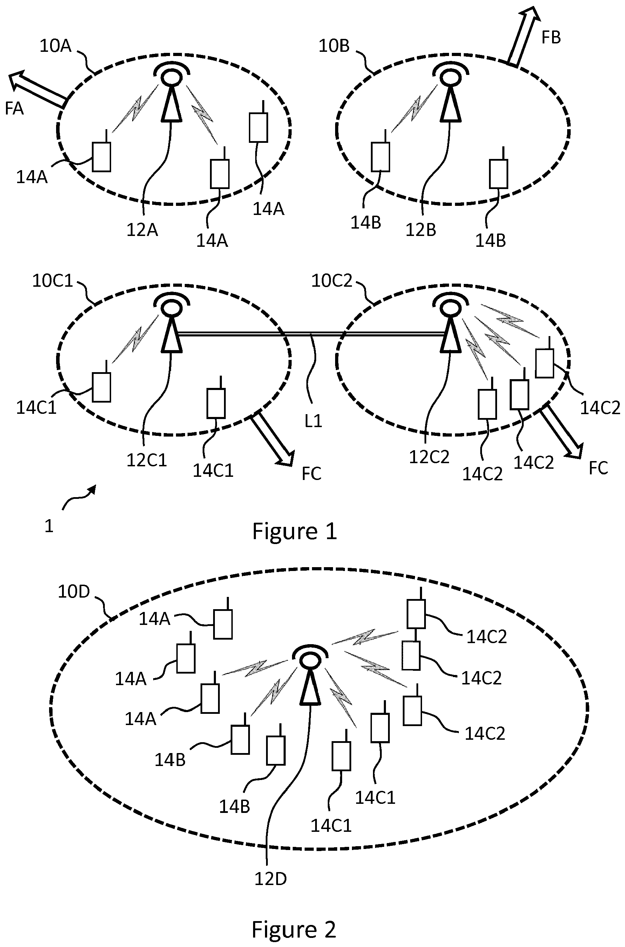

La figure 1 illustre une forme de réalisation du système 1 de télécommunications selon l'invention. Le système 1 comprend une première cellule 10A mobile, une deuxième cellule 10B mobile, une troisième cellule 10C1 mobile, une quatrième cellule 10C2 mobile et une cinquième cellule 10D fixe (illustrée par la figure2), appartenant toutes à un même réseau identifié par un identifiant de réseau (Public Land Mobile Network Identifier en langue anglaise).

La première cellule 10A mobile comprend une première station de base 12A mobile à laquelle est attachée une première pluralité d'équipements d'utilisateur 14A mobiles.

De même, la deuxième cellule 10B mobile comprend une deuxième station de base 12B mobile à laquelle est attachée une deuxième pluralité d'équipements d'utilisateur 14B mobiles.

La première cellule 10A mobile et la deuxième cellule 10B mobile constituent des cellules mobiles autonomes qui fonctionnent indépendamment l'une de l'autre et qui peuvent, par exemple, se déplacer respectivement dans une direction FA et dans une direction FB.

La troisième cellule 10C1 mobile comprend une troisième station de base 12C1 mobile à laquelle est attachée une troisième pluralité d'équipements d'utilisateur 14C1 mobiles et la quatrième cellule 10C2 mobile comprend une quatrième station de base 10C2 mobile à laquelle est attachée une quatrième pluralité d'équipements d'utilisateur 14C2 mobiles. La troisième station de base 12C1 et la quatrième station de base 10C2 sont reliées par un lien de communication L1, par exemple de type IP, de sorte qu'un équipement d'utilisateur de la troisième pluralité d'équipements d'utilisateur 14C1 puisse s'attacher à la quatrième station de base 12C2 pour communiquer avec la troisième cellule 10C1 mobile via le lien de communication L1 et/ou qu'un équipement d'utilisateur de la quatrième pluralité d'équipements d'utilisateur 14C2 puisse s'attacher à la troisième station de base 12C1 pour communiquer avec la quatrième cellule 10C2 mobile via le lien de communication L1. La troisième cellule 10C1 mobile et la quatrième cellule 10C2 mobile constituent des cellules mobiles autonomes qui fonctionnent indépendamment l'une de l'autre tout en étant couplées, via le lien de communication L1, et qui peuvent, par exemple, se déplacer ensemble dans une direction FC.
0La cinquième cellule 10D, fixe, illustrée à la figure 2, comprend une cinquième station de La cinquième cellule 10D, fixe, illustrée à la figure 2, comprend une cinquième station de base 12D, fixe, à laquelle peuvent s'attacher la première pluralité d'équipements d'utilisateur 14A, la deuxième pluralité d'équipements d'utilisateur 14B, la troisième pluralité d'équipements d'utilisateur 14C1 et/ou la quatrième pluralité d'équipements d'utilisateur 14C2, par exemple lorsqu'elles sont dans la couverture cellulaire de la cinquième station de base 10D fixe et que la première station de base 10A mobile, la deuxième station de base 10B mobile, la troisième station de base 10C1 mobile et/ou la quatrième station de base 10C2 mobile sont désactivées.

A titre d'exemple, la première station de base 12A, la deuxième station de base 12B, la troisième station de base 12C1 et la quatrième station de base 12C2 peuvent être montées sur des véhicules mobiles tandis que la cinquième station de base 12D peut être montée sur un immeuble ou une structure temporaire.

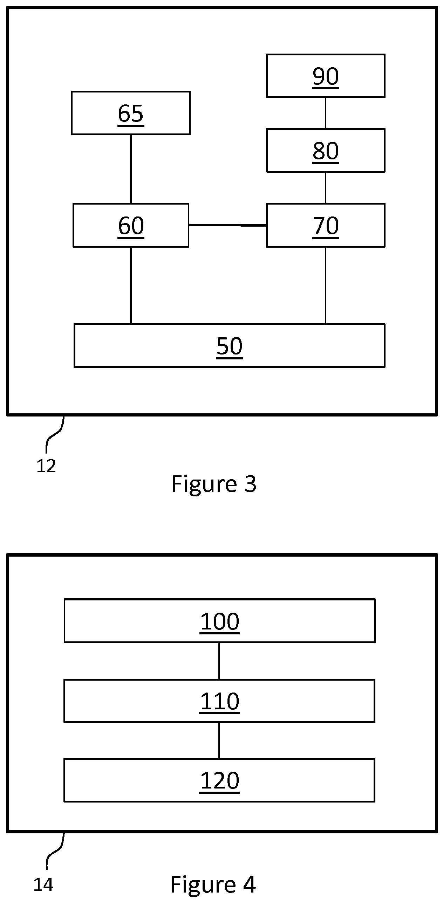

La première station de base 12A, la deuxième station de base 12B, la troisième station de base 12C1 et la quatrième station de base 12C2 sont décrites fonctionnellement ci-après en référence à une station de base 12 illustrée à la figure 3. De même, les équipements d'utilisateur 14A, 14B, 14C1 et 14C2 sont décrits fonctionnellement ci-après en référence à un équipement d'utilisateur 14 illustré à la figure 4.

### a) Station de base 12

La figure 3 illustre schématiquement une forme de réalisation d'une station de base 12 selon l'invention. Une telle station de base 12 se présente sous la forme d'un noeud comprenant un module de communication radio 50, un module de gestion de la mobilité 60, un module de de données d'utilisateurs 65, un module de passerelle servante 70, un module de passerelle réseau pour paquets de données 80 et un module applicatif 90.

### i) Module de communication radio 50

Le module de communication radio 50 constitue une entité connue sous le nom « d'eNodeB » dans la terminologie 3GPP LTE.

Le module de communication radio 50 est configuré pour permettre une ou une pluralité de communications de données applicatives entre le module applicatif 90 et un ou une pluralité d'équipements d'utilisateur 14 attachés à la station de base 12.

Selon l'invention, le module de communication radio 50 est en outre configuré pour recevoir une requête d'attachement à la station de base 12, envoyée par un équipement d'utilisateur 14.

### ii) Module de gestion de la mobilité 60

Le module de gestion de la mobilité 60 d'une station de base 12 est caractérisé par un premier identifiant, unique et qui lui est propre de sorte que seuls les équipements d'utilisateur 14 qui ont connaissance de ce premier identifiant peuvent demander à être attachés à cette station de base 12.

Le module de gestion de la mobilité 60 est configuré pour gérer la mobilité d'un équipement d'utilisateur 14 selon la fonction de gestion de la mobilité définie dans les standards 3GPP sous le nom de « MME » (Mobile Management Entity) connue de l'homme du métier.

Plus précisément, l'entité de gestion de la mobilité MME 60 est configurée pour établir et contrôler les liaisons de transport LTE (« LTE Bearers ») entre le module de communication radio 50, le module de passerelle servante 70, le module de passerelle de réseau pour paquets de données 80 et les équipements d'utilisateur 14 afin de communiquer des paquets de données applicatives entre le ou les équipements d'utilisateur 14 attachés à la station de base 12 et le module applicatif 90.

En particulier, l'entité de gestion de la mobilité MME 60 contrôle les communications des équipements d'utilisateur 14 entre le module de communication radio 50 et le module de passerelle servante 70.

Selon l'invention, le module de gestion de la mobilité 60 est configuré pour permettre l'attachement d'un équipement d'utilisateur 14 à la station de base 12 lorsque un deuxième identifiant, envoyé dans une requête d'attachement par ledit équipement d'utilisateur 14 à ladite station de base 12 via le module de communication radio 50, correspond à un premier identifiant du module de gestion de la mobilité 60 de la station de base 12.

Le module de gestion de la mobilité 60 permet notamment l'authentification d'un équipement d'utilisateur 14 : indirectement, auprès du module de gestion de données d'utilisateurs 65 lors d'une première requête d'attachement envoyée par un équipement d'utilisateur 14, ou directement, pour un équipement d'utilisateur 14 déjà attachée à la station de base 12.

### iii) Module de gestion de données d'utilisateurs 65

De même, le module de données d'utilisateurs 65 est configuré pour stocker et gérer des données associées aux équipements d'utilisateur 14 autorisés à s'attacher à la station de base 12 via le module de communication radio 50 et le module de gestion de la mobilité 60 selon la fonction de base de données d'utilisateurs définie dans les standards 3GPP sous le nom de « HSS » (Home Subscriber Server) connue de l'homme du métier.

Les données du module de données d'utilisateurs 65 permettent au module de gestion de la mobilité 60, à partir d'un deuxième identifiant, reçu d'un équipement d'utilisateur 14 dans une requête d'attachement, d'autoriser, ou non, l'attachement dudit équipement d'utilisateur 14 à la station de base 12.

Les données du module de données d'utilisateurs 65 peuvent, par exemple, être des clés d'authentification, des informations sur les droits des équipements d'utilisateur etc.

### iv) Module de passerelle servante 70

Le module de passerelle servante 70 est configuré pour router, c'est-à-dire aiguiller, des paquets de données entre le module de passerelle réseau pour paquets de données 80 et le module de communication radio 50 selon la fonction de routage définie dans les standards 3GPP sous le nom de « SGW » (Serving Gateway) connue de l'homme du métier.

### v) Module de passerelle de réseau pour paquets de données 80

Le module de passerelle de réseau pour paquets de données 80 est un point d'accès configuré pour communiquer des paquets de données avec le module applicatif 90 via un lien de communication, par exemple de type Protocole Internet (IP), selon la fonction de routage définie dans les standards 3GPP sous le nom de « PGW » (Packet Data Network Gateway ou PGW) connue de l'homme du métier.

### vi) Module applicatif 90

Le module applicatif 90 est configuré pour gérer des applications, par exemple, de type communication vocale « push-to-talk » ou communication vidéo, connues de l'homme du métier, utilisées par les équipements d'utilisateur 14, notamment en communiquant des données applicatives avec lesdits équipements d'utilisateur 14.

### vii) Lien de communication L1

Dans l'exemple de la figure 1, la troisième station de base 12C1 mobile est reliée à la quatrième station de base 12C2 mobile via un lien de communication L1.

Ce lien de communication L1 peut être un lien de communication IP-IP réalisé au niveau applicatif au-dessus des modules de passerelle de réseau pour paquets de données 80 de la troisième station de base 12C1 et de la quatrième station de base 12C2.

Ce lien de communication L1 peut aussi être un lien de communication entre le module de passerelle de réseau pour paquets de données 80 de la troisième station de base 12C1 et le module de passerelle servante 70 de la quatrième station de base 12C2 ou bien un lien de communication entre le module de passerelle de réseau pour paquets de données 80 de la quatrième station de base 12C2 et le module de passerelle servante 70 de la troisième station de base 12C1 (interface S5 du standard 3GPP LTE).

De manière préférée, ce lien de communication L1 est un lien de communication entre, d'une part, le module de communication radio 50 de la troisième station de base 12C1 et, d'autre part, le module de gestion de la mobilité 60 et le module de passerelle servante 70 de la quatrième station de base 12C2 ou bien un lien de communication entre, d'une part, le module de communication radio 50 de la quatrième station de base 12C2 et, d'autre part, le module de gestion de la mobilité 60 et le module de passerelle servante 70 de la troisième station de base 12C1 (interface S1 du standard 3GPP LTE). Dans ce cas, le module de communication radio 50 de la troisième station de base 12C1 (respectivement de la quatrième station de base 12C2) peut ainsi avantageusement accéder à la fois au module de gestion de la mobilité 60 de la troisième station de base 12C1 et de la quatrième station de base 12C2 (respectivement de la quatrième station de base 12C2 et de la troisième station de base 12C1) afin de vérifier que le premier identifiant fourni par un équipement d'utilisateur 14 corresponde à un module de gestion de la mobilité 60 qui lui est accessible.

### b) Equipement d'utilisateur 14

La figure 4 illustre schématiquement un équipement d'utilisateur 14 selon l'invention. Un tel équipement d'utilisateur 14 comprend une unité de communication radio 100, une unité d'attachement 110 à une station de base 12 et une unité applicative 120.

L'unité de communication radio 100 est configurée pour communiquer, sur une interface radio eUTRAN définie dans le standard LTE, avec le module de communication radio 50 d'une station de base 12.

Selon l'invention, l'unité d'attachement 110 est configurée pour générer une requête d'attachement à une station de base 12 et l'envoyer, via l'unité de communication radio 100, dans le but d'attacher l'équipement d'utilisateur 14 à ladite station de base 12. Une telle unité d'attachement 110 peut être, par exemple, mise en oeuvre par le contrôle de ressource radio (Radio Resource Control ou RRC dans la terminologie 3GPP).

L'unité applicative 120 est configurée pour gérer des applications, par exemple, de type communication vocale « push-to-talk » ou communication vidéo, connues de l'homme du métier, notamment en communiquant des données applicatives avec une station de base 12.

### II. Mise en oeuvre de l'invention

Le procédé selon l'invention peut comprendre une étape préliminaire de sélection d'un mode de fonctionnement parmi un mode de fonctionnement en cellule mobile autonome ou un mode de fonctionnement en réseau de télécommunications large-bande.

Dans le mode de fonctionnement en réseau de télécommunications large-bande, une première station de base est connectée via ledit réseau à une pluralité de stations de base, par exemple fixes, et autorise tout équipement d'utilisateur à s'attacher, par exemple en fonction de sa proximité ou des ressources en bande passante disponibles.

Ce dernier mode de fonctionnement en réseau correspond, par exemple, au fonctionnement standard d'un réseau 3GPP UMTS ou LTE public (i.e. commercial) tel qu'il est défini dans la norme 3GPP principalement dans la spécification TS 36.300 (eUTRAN overall description - Stage2), ainsi que dans la spécification TS23.401 (GPRS enhancement for eUtran).

Dans ce mode de fonctionnement, le réseau de télécommunications large-bande est de préférence un réseau 3GPP de type UMTS, LTE, LTE-Advanced ou ultérieur.

### a) Exemple 1 : attachement d'un équipement d'utilisateur à sa station de base de référence

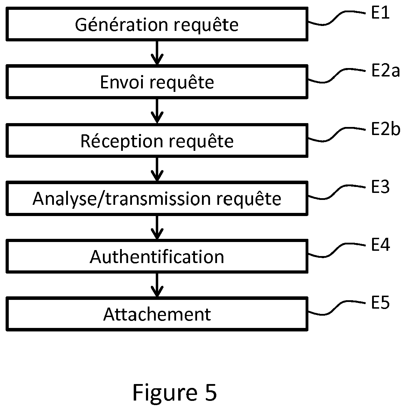

La figure 5 illustre un mode de mise en oeuvre du procédé selon l'invention par une station de base 12A d'une cellule autonome 10A (en référence à la figure 1) non couplée à une autre cellule et dans le cas d'une communication non-urgente. Le module de gestion de la mobilité 60 de ladite station de base 12A est identifié par un premier identifiant.

Dans une étape E1, l'unité d'attachement 110 de l'équipement d'utilisateur 14A génère une requête d'attachement comprenant un deuxième identifiant d'un module de gestion de la mobilité en vue de s'attacher à la station de base 12A.

La requête d'attachement ainsi générée est envoyée, dans une étape E2a, par l'unité de communication radio 100 de l'équipement d'utilisateur 14A au module de communication radio 50 de la station de base 12A qui la reçoit dans une étape E2b.

Une fois la requête d'attachement reçue de l'équipement d'utilisateur 14A, le module de communication radio 50 analyse le deuxième identifiant et transmet la requête d'attachement au module de gestion de la mobilité 60 de la station de base 12A lorsque le deuxième identifiant est identique au premier identifiant dans une étape E3.

Le module de gestion de la mobilité 60 permet alors l'authentification, dans une étape E4, de l'équipement d'utilisateur 14A afin de l'autoriser à s'attacher à la station de base 12A dans une étape E5.

Au premier attachement de l'équipement d'utilisateur 14A, le module de gestion de la mobilité 60 relaie la requête d'attachement de l'équipement d'utilisateur 14A au module de gestion de données d'utilisateurs 65 qui réalise alors l'authentification de l'équipement d'utilisateur 14A (qui est transparente pour le module de gestion de la mobilité 60 et le module de communication radio 50) de manière connue de l'homme du métier. Si cette première authentification s'est réalisée correctement, alors le module de gestion de la mobilité 60 reçoit des clés dérivées au module de gestion de données d'utilisateurs 65 qui serviront pour les communications futures avec l'équipement d'utilisateur 14A. Ainsi, à chaque fois que l'équipement d'utilisateur 14A se connecte ou s'attache ultérieurement au réseau, le module de gestion de la mobilité 60 réalise lui-même l'authentification (qui est transparente pour le module de communication radio 50) de manière connue de l'homme du métier. Une fois l'authentification réalisée, le module de communication radio 50 reçoit du module de gestion de la mobilité 60 une clé temporaire valide uniquement pour le temps de la communication avec l'équipement d'utilisateur 14A. A réception de cette clé, les échanges entre l'équipement d'utilisateur 14A et le module de communication radio 50 sont chiffrées et « intègres ». Si sur chacune de ces tentatives d'authentification, il y a un échec, l'équipement d'utilisateur 14A est soit rejeté du réseau (cas d'authentification rejetée au niveau du module de gestion de données d'utilisateurs 65), soit invité à se ré-authentifier avec le module de gestion de données d'utilisateurs 65 (cas d'échec avec le module de gestion de la mobilité 60 ou le module de communication radio 50).

Suite à son attachement à une des stations de base d'un système de télécommunications l'équipement utilisateur reçoit de la part de la station de base une information de confirmation de l'état de son attachement. On entend par information de confirmation de l'état d'attachement :
- un message retour indiquant que l'attachement a eu lieu ou non ;
- et/ou un message retour indiquant que l'authentification a eu lieu ;
- et/ou une première communication indiquant que l'attachement a eu lieu.

Plus précisément dans un réseau 3GPP la confirmation d'attachement de l'équipement utilisateur est réalisée de la façon suivante (voir 3GPP TS 23.401 §5.3.2.1, figure 5.3.2.1-1) : après avoir envoyé une requête d'attachement (« attach request » voir étape 1) et une fois les procédures de d'identity management, d'authentication, de ciphering effectuées, l'équipement utilisateur reçoit un message d'acceptation (« attach accept » voir étape 18). Finalement l'équipement utilisateur confirme son attachement en envoyant un message de confirmation (« attach complete » voir étape 22).

La requête d'attachement peut être la requête « RRC Connection Complete » définie dans dans la procédure de « RRC Connection Establishment» décrite dans la spécification 3GPP TS36.331 dans laquelle la valeur du champ « registeredMME » a été remplie avec l'identifiant du module de gestion de la mobilité 60 de la station de base 12 de référence de l'équipement d'utilisateur 14.

Lors d'un attachement initial d'un équipement d'utilisateur 14 à une station de base 12, le module de gestion de la mobilité 60 génère et envoie une identité de souscripteur mobile temporaire appelée S-TMSI (System Network Evolution - Temporary Mobile Subscriber Evolution) dans la norme 3GPP qui permet à l'équipement d'utilisateur de rester attaché à la station de base 12 même s'il ne communique pas avec elle.

Lorsque le deuxième identifiant, envoyé par l'équipement d'utilisateur 14 est différent du premier identifiant, stocké dans le module de données d'utilisateurs 65, ou que l'équipement d'utilisateur 14 n'est pas authentifié auprès du module de données d'utilisateurs 65 ou du module de gestion de la mobilité 60, le module de la gestion de la mobilité 60 refuse à l'équipement d'utilisateur 14 de s'attacher à la station de base 12 sauf dans deux cas particuliers.

Un premier cas est relatif à une communication d'urgence et un deuxième cas correspond au cas où deux stations de base sont couplées (« bounding cells » en langue anglaise).

### b) Exemple 2 : communication d'urgence

Dans le cas d'une communication d'urgence, n'importe quel équipement d'utilisateur 14 doit pouvoir s'attacher à n'importe quelle station de base 12 afin de communiquer. En d'autres termes, un équipement d'utilisateur 14 doit pouvoir communiquer via une station de base 12 dont il ne connait pas l'identifiant du module de gestion de la mobilité 60.

En cas d'urgence, l'unité d'attachement 110 de l'équipement d'utilisateur génère une requête d'attachement comprenant une information sur la nature urgente de la communication à établir et la transmet à l'unité de communication radio 100.

L'unité de communication radio 100 envoie alors ladite requête d'attachement au module de communication radio 50 de la ou des stations de base dans la couverture desquelles il se trouve.

Le module de communication radio 50 transmet la requête d'attachement au module de gestion de la mobilité 60 qui reçoit ainsi l'information sur la nature urgente de la communication à établir (par exemple le champ « establishment cause » d'une requête « RRC Connection Request » définie dans le standard 3GPP) et autorise l'attachement de l'équipement d'utilisateur 14 à la station de base 12.

### c) Exemple 3 : stations de base 12C1/12C2 couplées

Cet exemple est illustré par la figure 1 dans laquelle une première station de base 12C1, comprenant un premier module de gestion de la mobilité 60 identifié par un premier identifiant, est connectée via un lien de communication direct L1, par exemple de type Internet Protocol (IP), à une deuxième station de base 12C2 comprenant une deuxième module de gestion de la mobilité 60 identifié par un troisième identifiant.

L'unité d'attachement 110 d'un équipement d'utilisateur 14C2 situé dans la couverture cellulaire de la deuxième station de base 12C2 génère dans une étape E1 une requête d'attachement comprenant un deuxième identifiant en vue de s'attacher à la première station de base 12C1.

La requête d'attachement ainsi générée est ensuite envoyée, dans une étape E2, par l'unité de communication radio 100 de l'équipement d'utilisateur 14C2 au module de communication radio 50 de la deuxième station de base 12C2.

Une fois la requête d'attachement reçue de l'équipement d'utilisateur 14C2, le module de communication radio 50 de la deuxième station de base 12C2 analyse le deuxième identifiant et le compare au troisième identifiant.

Le deuxième identifiant étant différent du troisième identifiant, le module de communication radio 50 de la deuxième station de base 12C2 le compare alors au premier identifiant du module de gestion de la mobilité 60 de la première station de base 12C1 car celle-ci est reliée à la deuxième station de base 12C2 et que le module de gestion de la mobilité 60 de la première station de base 12C1 est donc accessible via le lien de communication L1.

Le troisième identifiant étant identique au premier identifiant, le module de gestion de la mobilité 60 de la deuxième station de base 12C2 authentifie l'équipement d'utilisateur 14C2 auprès du module de données utilisateurs 65 de la première station de base 12C1 via le module de passerelle servante 70 et le module de passerelle de réseau pour paquets de données 80 de la deuxième station de base 12C2, le lien de communication IP et le module de passerelle servante 70 et le module de passerelle de réseau pour paquets de données 80 de la première station de base 12C1 afin d'autoriser l'attachement de l'équipement d'utilisateur 14C2 à la deuxième station de base 12C2 de sorte qu'il puisse communiquer via la deuxième station de base 12C2, le lien de communication IP et la première station de base 12C1, par exemple avec un autre équipement d'utilisateur 14C1 attaché à la première station de base 12C1.

### d) Exemple 4 : attachement à une station de base 12D commune

Lorsque les stations de base 12A, 12B, 12C1 et 12C2 sont désactivées, il peut être prévu d'attacher les équipements d'utilisateur 14A, 14B, 14C1 et 14C2 qui leur étaient attachés à une station de base commune 12D, fixe dans cet exemple, d'une cellule commune 10D illustrées à la figure 2.

L'attachement des équipements d'utilisateur 14A, 14B, 14C1 et 14C2 est réalisé en procédant à un transfert d'attachement de leur station de base de référence 12A, 12B, 12C1 et 12C2 vers la station de base commune 12D. Un tel transfert (handover en langue anglaise) est défini dans les standards 3GPP et est donc connu de l'homme du métier.

Un tel cas peut se produire, par exemple, lorsque les stations de base mobiles sont montés sur des véhicules et que les véhicules rentrent à un point de regroupement (camp) pour se ravitailler en énergie.

## Revendications

1. Procédé d'attachement d'un équipement d'utilisateur (14) à une première station de base (12) d'un système de télécommunications large-bande, ledit procédé étant **caractérisé en ce que**, la première station de base (12) comprenant un premier module de gestion de la mobilité (60) identifié par un premier identifiant, le procédé comprend une étape de réception (E2b) d'une requête d'attachement, envoyée par ledit équipement d'utilisateur (14), comprenant un deuxième identifiant d'un module de gestion de la mobilité (60) et, lorsque le deuxième identifiant est identique au premier identifiant, une étape d'attachement (E5) de l'équipement d'utilisateur (14) à la première station de base (12).

2. Procédé selon la revendication 1, **caractérisé en ce que** l'étape d'attachement comprend une authentification de l'équipement d'utilisateur (14).

3. Procédé selon l'une des revendications précédentes, **caractérisé en ce que** l'attachement de l'équipement d'utilisateur (14) à la première station de base (12) est refusé lorsque le deuxième identifiant est différent du premier identifiant.

4. Procédé selon l'une des revendications 1 et 2, **caractérisé en ce que** l'attachement de l'équipement d'utilisateur (14) à la première station de base (12) est autorisé lorsque le deuxième identifiant est différent du premier identifiant et que la première station de base (12C1) est connectée via un lien de communication(L1) à une deuxième station de base (12C2) comprenant un deuxième module de gestion de la mobilité (60) identifié par un troisième identifiant, identique au deuxième identifiant.

5. Procédé selon l'une des revendications 1 et 2, **caractérisé en ce que**, la requête d'attachement comprenant en outre une information sur la nature de la requête d'attachement, urgente ou non-urgente, l'attachement de l'équipement d'utilisateur à la première station de base est autorisé lorsque le deuxième identifiant est différent du premier identifiant et que la requête d'attachement est de nature urgente.

6. Procédé d'attachement d'un équipement d'utilisateur (14) à une station de base (12) d'un système de télécommunications large-bande, ledit procédé étant **caractérisé en ce que**, ladite station de base (12) comprenant un module de gestion de la mobilité (60), le procédé comprend une étape d'envoi, par ledit équipement d'utilisateur (14), d'une requête d'attachement comprenant un identifiant dudit module de gestion de la mobilité (60) de manière à attacher l'équipement d'utilisateur (14) à la station de base (12).

7. Procédé d'attachement selon la revendication précédente comprenant une étape de génération de la part d'un équipement utilisateur d'une requête conprenant au moins une information sur la nature non-urgente ou urgente de la communication, une étape d'envoi de la part de l'équipement utilisateur de ladite requête à la station de base et une étape de réception d'un message retour envoyé par la station de base, ledit message retour indiquant que l'attachement est réalisé lorsque la communication est urgente ou comprenant une information de confirmation de l'état d'attachement lorsque la communication est non-urgente.

8. Equipement d'utilisateur (14) comprenant une unité de communication radio (100), configurée pour communiquer avec un module de communication radio (50) d'une station de base (12) d'un système de télécommunications large-bande (1), et une unité d'attachement (110), configurée pour générer une requête d'attachement à une station de base (12) comprenant un deuxième identifiant d'un module de gestion de la mobilité (60) et pour l'envoyer à ladite station de base (12), via l'unité de communication radio (100), dans le but d'attacher l'équipement d'utilisateur (14) à la station de base (12).

9. Station de base d'un système de télécommunications large-bande (1), ladite station de base (12) étant **caractérisée en ce qu'**elle comprend un module de gestion de la mobilité (60) identifié par un premier identifiant et un module de communication radio (50) configuré pour recevoir, d'un équipement d'utilisateur (14), une requête d'attachement comprenant un deuxième identifiant d'un module de gestion de la mobilité (60), le module de gestion de la mobilité (60) étant configuré pour, lorsque le deuxième identifiant est identique au premier identifiant, attacher l'équipement d'utilisateur (14) à la station de base (12).

10. Station de base selon la revendication précédente, **caractérisée** en qu'elle comprend un module de données d'utilisateurs (65), relié au module de gestion de la mobilité (60), configuré pour stocker et gérer des données associées à des équipements d'utilisateur (14) de sorte à autoriser ou non leur attachement à la station de base (12).

11. Station de base selon l'une des revendications 9 et 10, **caractérisée en ce qu'**elle comprend en outre un module de passerelle servante (70), un module de passerelle réseau pour paquets de données (80) et/ou un module applicatif (90), ledit module de passerelle servante (70) étant configuré pour router des paquets de données entre le module de passerelle réseau pour paquets de données (80) et le module de communication radio (50), ledit module de passerelle réseau pour paquets de données (80) étant configuré pour communiquer des paquets de données avec une entité extérieure à la station de base (12) via un lien de communication (L1), ledit module applicatif (90) étant configuré pour échanger des données applicatives avec une unité applicative (120) d'un équipement d'utilisateur.

12. Système comprenant au moins un équipement d'utilisateur (14) selon la revendication 8 et au moins une station de base (12) selon l'une des revendications 9 à 11.

13. Programme d'ordinateur comportant des instructions pour la mise en oeuvre du procédé selon l'une des revendications 1 à 5 lorsque le programme est exécuté par au moins un processeur.

14. Programme d'ordinateur comportant des instructions pour la mise en oeuvre du procédé selon la revendication 6 ou la revendication 7 lorsque le programme est exécuté par au moins un processeur.
